# EUROPEAN PATENT APPLICATION

(11) **EP 2 006 558 A2**
(43) Date of publication of application: **24.12.2008**
(21) Application number: 08011140.4
(22) Date of filing: 19.06.2008
(51) Int. Cl.: F16C 32/04, B23Q 1/70, B24B 41/04

(54) **Magnetic bearing device and machine tool with such a device**

(30) Priority: 22.06.2007 JP 2007165512
(71) Applicant: JTEKT Corporation, Osaka-shi Osaka 542-8502 (JP)
(72) Inventor: Ishigami, Takayuki, Tokyo 125-0042 (JP)
(74) Representative: Schaeberle, Steffen

(57) **Abstract**

A magnetic bearing device includes a main shaft (10) provided with a flange part (16) extending in a radial direction. Axial magnetic bearings (30) which are arranged so as to be opposed to the flange part (16) in an axial direction support the main shaft (10) in the axial direction by electromagnets. An axial displacement sensor (40) is provided for detecting a position of the main shaft (10) in the axial direction. The axial displacement sensor (40) is characterized in that it is arranged so as to be opposed to the flange part (16) in the radial direction.

## Description

### BACKGROUND OF THE INVENTION

The present invention relates to a magnetic bearing device provided with an axial magnetic bearing for supporting a main shaft, and a machine tool provided with the same.

Generally, in a machine tool such as a grinding apparatus and a cutting apparatus, for example, a magnetic bearing device which is provided with an axial magnetic bearing for supporting a main shaft in a non-contact manner for the purpose of rotating the main shaft (spindle) at a high speed has been employed. More specifically, the axial magnetic bearing of the magnetic bearing device is so constructed that it includes an electromagnet which is opposed to a part of the main shaft in an axial direction (that is, in a direction parallel to a rotation axis of the main shaft) to apply an attractive force or a repulsive force to the main shaft by a magnetic force generated by the electromagnet. Accordingtosuchstructure, theaxialmagnetic bearing supports the main shaft in the axial direction in a non-contact state with respect to the main shaft.

Generally, the magnetic bearing device is provided with an axial displacement sensor in order to keep the non-contact state between the main shaft and the axial magnetic bearing. Specifically, the magnetic bearing device is provided with the axial displacement sensor for detecting the position of the main shaft in the axial direction, for the purpose of adjusting a distance between the main shaft and the axial magnetic bearing in the axial direction, by controlling the magnetic force generated by the aforesaid electromagnet. As the axial displacement sensor of this type (a thrust displacement sensor), an axial displacement sensor which has, for example, a sensor coil including a sensor core and an insulated electric wire wound around the sensor core thereby to measure a surface of a sensor target which is attached to an end of the main shaft in the axial direction (that is, one end in the axial direction of the rotation shaft) has been disclosed (See Japanese Patent Publication No. JP-A-6-26521, for example).

In this case, there has been a problem that the axial displacement sensor must be arranged so as to be opposed to the sensor target which is attached to the end of the main shaft in the axial direction, and so, there are restrictions in arranging the axial displacement sensor.

Under the circumstances, for the purpose of reducing the restrictions in arranging the axial displacement sensor, there has been proposed a magnetic bearing device in which the axial displacement sensor (a pair of ring-shaped magnetic sensors) is arranged so as to be opposed to the main shaft in a radial direction (that is, a direction perpendicular to the axial direction) (See Japanese Utility Model Registration No.2557480, for example).

However, in the magnetic bearing device disclosed in Japanese Utility Model Registration No. 2557480, there has been a problem that a length of the main shaft is increased in the axial direction, although the restrictions in arranging the axial displacement sensor are reduced.

### SUMMARY OF THE INVENTION

The inventionhas beenmade to overcome the above described problems, and it is an object of the invention to provide a magnetic bearing device in which a length of a main shaft in an axial direction can be reduced, and a machine tool provided with the same.

According to a first aspect of the invention, there is provided a magnetic bearing device comprising:
a main shaft including a flange part extended in a radial direction of the main shaft;
an axial magnetic bearing that is arranged so as to be opposed to the flange part in an axial direction of the main shaft and supports the main shaft in the axial direction by an electromagnet; and
an axial displacement sensor that detects a position of the main shaft in the axial direction, and is arranged so as to be opposed to the flange part in the radial direction.

According to this structure, the axial displacement sensor is arranged so as to be opposed to the flange part in the radial direction, for the purpose of detecting the position of the main shaft in the axial direction. Therefore, there is no necessity of separately providing a space for mounting the axial displacement sensor. Accordingly, it is possible to reduce the length of the main shaft in the axial direction. Moreover, because the length of the main shaft is reduced, natural frequency of the main shaft is increased, whereby occurrence of resonance can be restrained. It is to be noted that the axial direction means the direction parallel to the rotation axis of the main shaft, and the radial direction means the direction perpendicular to the axial direction.

According to a second aspect of the invention, there is provided the magnetic bearing device according to the first aspect, wherein the axial displacement sensor includes a pair of sensor coils.
According to this structure, it is possible to obtain the substantially same operation and effects as the first aspect of the invention.

According to a third aspect of the invention, there is provided a machine tool comprising the magnetic bearing device according to the first aspect of the invention.
According to this structure, the machine tool is provided with the magnetic bearing device according to the first aspect, and therefore, it is possible to obtain the substantially same effects as the invention as described above.

According to the invention, it is possible to reduce the length of the main shaft in the axial direction, and to restrain occurrence of resonance, by increasing the natural frequency of the main shaft.

### BRIEF DESCRIPTION OF THE DRAWINGS

Fig. 1 is a sectional view of a machine tool provided with a magnetic bearing device according to an embodiment of the invention.
Fig. 2 is an enlarged view of a part of the magnetic bearing device according to the embodiment of the invention.
Fig. 3 is a sectional view of a modification of the machine tool provided with the magnetic bearing device according to the embodiment of the invention.

### DETAILED DESCRIPTION OF PREFERRED EMBODIMENTS

Now, an embodiment of the invention will be described with reference to the drawings. It is to be noted that in this embodiment, description will be made referring to a machine tool for working a work (an object to be worked), which is provided with the magnetic bearing device according to the invention, as an example.

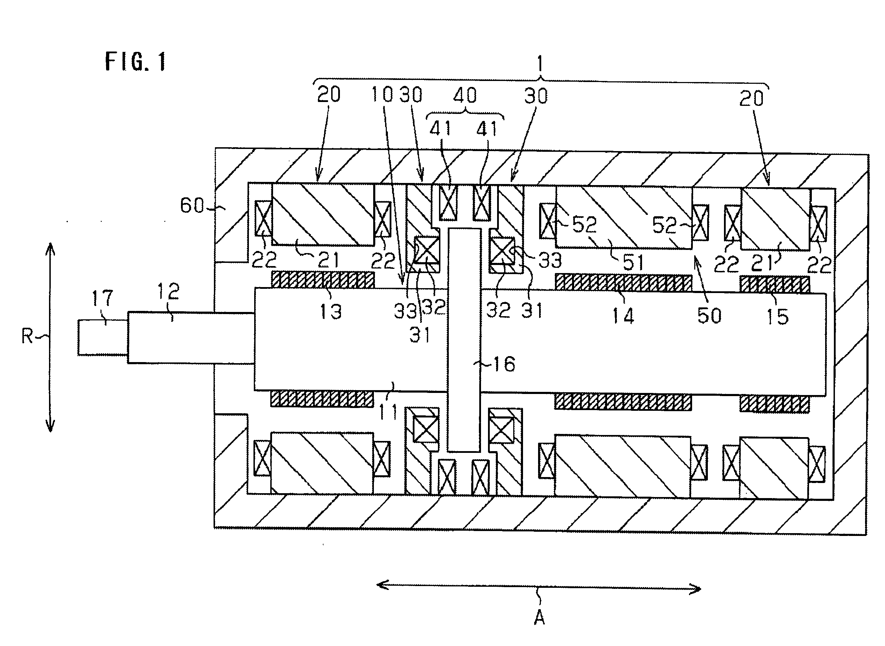

As shown in Fig. 1, a magnetic bearing device 1 includes a main shaft 10, a pair of radial magnetic bearings 20 for supporting the main shaft 10 in a radial direction (a direction of an arrow mark R, in the drawings), a pair of axial magnetic bearings 30 for supporting the main shaft 10 in an axial direction (a direction of an arrow mark A, in the drawings), and an axial displacement sensor 40 for detecting a position of the main shaft 10 in the axial direction A.

The main shaft 10 has a large diameter part 11, and a small diameter part 12 which is projected from the large diameter part 11 in the axial direction A, as shown in Fig. 1. Laminated plates of silicon steel 13, 14, 15 are provided on an outer periphery of the large diameter part 11, and a disc-shaped flange part 16 formed of magnetic material is provided so as to extend from the large diameter part 11 in the radial direction R. Moreover, a grinding tool 17 is attached to a distal end of the small diameter part 12.

The radial magnetic bearings 20 are electromagnets which are positioned so as to be opposed to the silicon steel plates 13, 15 at opposite ends in the axial direction A, each including an iron core 21, and a coil 22 formed of an electrically conductive wire which is wound around the iron core 21. A plurality of the radial magnetic bearings 20 are arranged at equal intervals along a circumferential direction of the main shaft 10 so as to be opposed to the silicon steel plates 13, 15. Accordingly, when an electric current is supplied to the coils 22, the radial magnetic bearings 20 generate magnetic attractive forces for attracting the silicon steel plates 13, 15 thereby to hold the main shaft 10 in a non-contact manner in the radial direction R.

The axial magnetic bearings 30 are arranged at both sides of the flange part 16 in the axial direction A so as to be opposed to the flange part 16 in the axial direction A, each including a yoke member 31 provided with an annular recess 33, and an electromagnet 32 contained in the recess 33. The electromagnet 32 is composed of a magnetic body (not shown) and a coil (not shown) which is formed by winding an electrically conductive wire around the magnetic body. Accordingly, when an electric current is supplied to the coils of the electromagnets 32, the axial magnetic bearings 30 generate magnetic attractive forces for attracting the flange part 16 formed of the magnetic material thereby to hold the main shaft 10 in a non-contact manner in the axial direction A. Moreover, by controlling the electric current to be supplied to the coils of the electromagnets 32, it is possible to adjust the position of the main shaft 10 in the axial direction A.

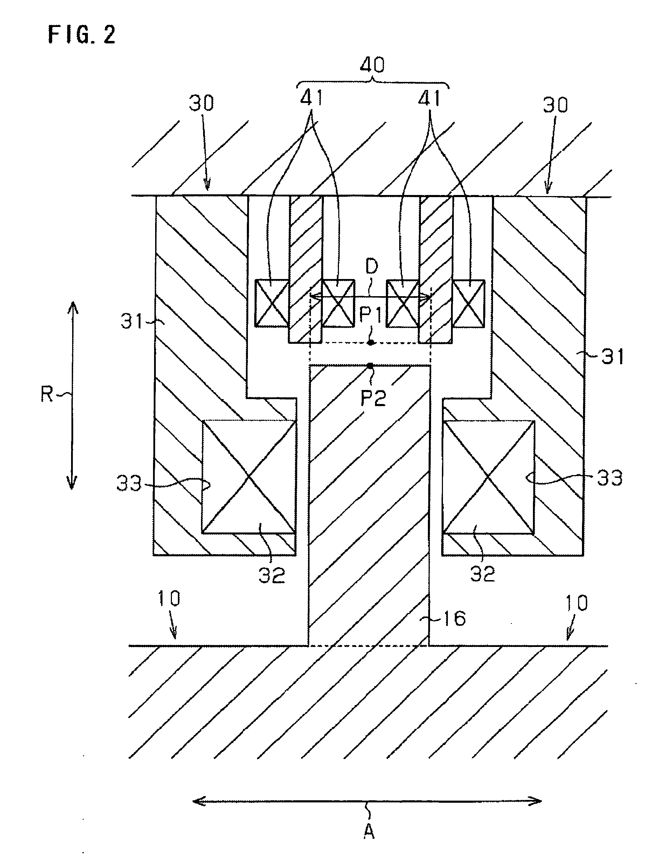

The axial displacement sensor 40 includes a pair of sensor coils 41 having equal inductances, and is arranged so as to be opposed to the flange part 16 in the radial direction R, for the purpose of detecting the position of the main shaft 10 in the axial direction A. Moreover, as shown in Fig. 2, a distance between respective centers of a pair of the sensor coils 41 in the axial direction A is made equal to a width D of the flange part 16 in the axial direction A, whereby an intermediate position P1 between the sensor coils 41 coincides with a center position P2 of the flange part 16 in the axial direction A. Accordingly, by applying volts alternating current to a pair of the sensor coils 41 and by measuring a difference in voltage drops between the sensor coils 41, it is possible to detect displacement of the flange part 16 (that is, the position of the main shaft 10 in the axial direction A). Specifically, when the center position P2 of the flange part 16 is displaced from the intermediate position P1 between the sensor coils 41, amounts of the voltage drops in the sensor coils 41 vary so that the inductances of the sensor coils 41 may vary. Accordingly, it can be said that the larger the difference in voltage drops between the sensor coils 41 is, the more the center position P2 of the flange part 16 is displaced in the axial direction A from the intermediate position P1 between the sensor coils 41.

The machine tool provided with the magnetic bearing device 1 having the above described structure includes, in addition to the magnetic bearing device 1, a stator 50 which generates a rotary magnetic field for rotating the main shaft 10 as a rotor, and a housing 60 for protecting the radial magnetic bearings 20, the axial magnetic bearings 30, the axial displacement sensor 41, and the stator 50 . In short, an electric motor is composed of the main shaft 10, as the rotor, and the stator 50.

The stator 50 is arranged so as to be opposed to the silicon steel plate 14, and includes a stator core 51 in a cylindrical shape and a coil 52 formed of an electrically conductive wire wound around the stator core 51. Because the stator core 51 is formed of soft magnetic material, it is possible to generate the rotary magnetic field by supplying an electric current to the coils 52.

The housing 60 is formed in a cylindrical shape, and the radial magnetic bearings 20, the axial magnetic bearings 30, the axial displacement sensor 40, and the stator 50 are fixed to an inner periphery of the housing 60.

Then, operation of the machine tool provided with the magnetic bearing device 1 will be described.
The main shaft 10 is supported in the non-contact manner by means of the radial magnetic bearings 20 and the axial magnetic bearings 30, and at the same time, the rotary magnetic field generated by the stator 50 creates a torque in the silicon steel plate 14 which is a magnetic body, thereby to rotate the main shaft 10 which is supported in the non-contact manner. Along with the rotation of the main shaft 10, the tool 17 attached to the distal end of the main shaft 10 is also rotated. By pressing the tool 17, which is rotating, onto a work (not shown), the machine tool can perform grinding work on the work. Moreover, because the main shaft 10 rotates while maintaining the non-contact state with respect to the axial magnetic bearings 30, it is possible to regulate the electric current to be supplied to the coils of the electromagnets 32 of the axial magnetic bearings 30, according to the position of the main shaft 10 in the axial direction A which has been detected by the axial displacement sensor 40.

This embodiment is characterized in that the main shaft 10 is provided with the flange part 16 which is extended in the radial direction R, and the axial displacement sensor 40 is arranged so as to be opposed to the flange part 16 in the radial direction R.

According to the magnetic bearing device 1 in the above described embodiment, the following advantages canbe obtained.
(1) Because the axial displacement sensor 40 is arranged so as to be opposed to the flange part 16 in the radial direction R, it is unnecessary to separately provide a space for mounting the axial displacement sensor 40. Accordingly, a length of the main shaft 10 in the axial direction A can be reduced. Moreover, because the length of the main shaft 10 is reduced, natural frequency of the main shaft 10 can be increased, whereby occurrence of resonance can be restrained.

Moreover, in the above described embodiment, the machine tool is provided with the magnetic bearing device 1, and so, the same advantage as described in the above item (1) can be obtained.

It is to be noted that the invention is not limited to the above described embodiment, but various design changes can be made on the basis of concept of the invention, and they are not excluded from a scope of the invention. For example, the above described embodiment can be modified as follows.

Although in the above described embodiment, the magnetic bearing device 1 is provided with a pair (two) of the radial magnetic bearings 20, the three or more radial magnetic bearings 20 may be provided. Alternatively, it is also possible to provide other bearings (foil bearings, for example) for supporting the main shaft 10 in the radial direction R, without providing the radial magnetic bearings 20.

Although in the above described embodiment, the magnetic bearing device 1 is provided with a pair (two) of the axial magnetic bearings 30 which are arranged at both sides of the flange part 16, there is no necessity of providing the two axial magnetic bearings 30, but it is possible to support the main shaft 10 in the axial direction A by means of a single axial bearing 30.

In the above described embodiment, the axial displacement sensor 40 is formed of the sensor coils 41 so that the difference in the voltage drops between the sensor coils 41 may be measured to detect the position of the main shaft 10. However, provided that the axial displacement sensor is arranged so as to be opposed to the main shaft 10 in the radial direction R, the axial displacement sensor may not be such an axial displacement sensor that detection of the position of the main shaft 10 is intended, as described above. For example, such an axial displacement sensor that it can detect the position of the main shaft 10, by detecting magnitude of a magnetic flux of the flange part 16 which is formed of permanent magnet may be employed.

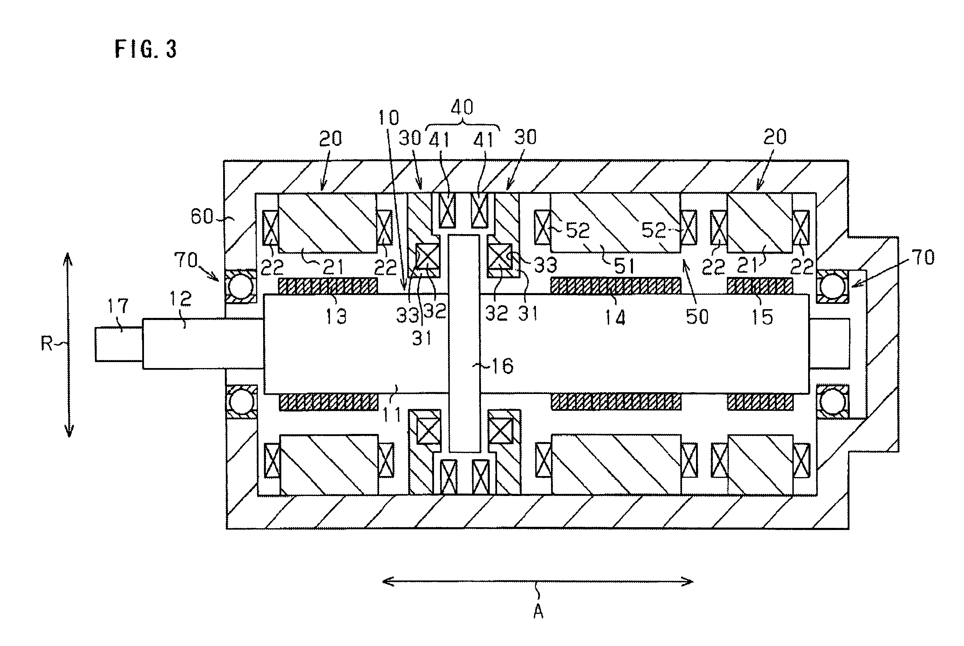

The magnetic bearing device may be further provided with touch down bearings 70 for supporting the main shaft 10, as shown in Fig. 3.

## Claims

1. A magnetic bearing device comprising:
a main shaft including a flange part extended in a radial direction of the main shaft;
an axial magnetic bearing that is arranged so as to be opposed to the flange part in an axial direction of the main shaft and supports the main shaft in the axial direction by an electromagnet; and
an axial displacement sensor that detects a position of the main shaft in the axial direction, and is arranged so as to be opposed to the flange part in the radial direction.

2. The magnetic bearing device according to claim 1, wherein the axial displacement sensor includes a pair of sensor coils.

3. The magnetic bearing device according to claim 2, wherein an intermediate position between the pair of sensor coils coincides with an axial center position of the flange part in the axial direction.

4. A machine tool comprising the magnetic bearing device according to claim 1.
